# EUROPEAN PATENT APPLICATION

(11) **EP 0 703 122 A1**
(43) Date of publication of application: **27.03.1996**
(21) Application number: 95306315.3
(22) Date of filing: 08.09.1995
(51) Int. Cl.: B60R 21/20

(54) **Passenger side air bag module cover attachment arrangement and method**

(30) Priority: 22.09.1994 US 310551
(71) Applicant: MORTON INTERNATIONAL, INC., Chicago, Illinois 60606 (US)
(72) Inventor: Kottke, Kurt E., Bountiful, Utah 84010 (US); Leonelli, Paul F., Ogden, Utah 84403 (US)
(74) Representative: Bankes, Stephen Charles Digby

(57) **Abstract**

A cover (18) for an air bag module (10) includes straight portions (58,60) projecting from the cover (18) each terminating in a slide (54,56) which is slidingly engageable with straight tracks (50,52) provided along opposed parallel sides of a rectangular opening of an associated reaction canister (12). Alternatively engagement of the cover (18) with the canister (12) may be by means of clips constituted by outwardly rolled over lip portions of the canister located around the opening with complementary grooves formed in the portions projecting from the cover (12). The requirement for additional fasteners to connect the cover (18) to the canister (12) is thus obviated. No flange is required around the periphery of the cover (18) and a close fit between the cover (18) and a surrounding vehicle facia can be achieved.

## Description

This invention relates to an air bag inflation restraint system for use on the passenger side of an automotive vehicle for restraining the movement of a seated occupant, specifically a passenger, during a collision. More particularly, the invention relates to an improved method of and apparatus for securing a passenger side cover, decorative or non-decorative, to a module.

In air bag installations for protecting passengers in automotive vehicles, an air bag module comprised of a reaction canister containing a folded air bag and an inflation device is stored behind a section of a vehicle interior trim panel such as the instrument panel. The air bag is inflated to be deployed within the vehicle passenger compartment of the vehicle on the occurrence of an incipient collision, and thus must enter the passenger compartment through an opening in the instrument panel. Typically, the opening is closed by a cover provided on the air bag module for enclosing the folded air bag within the reaction canister. Where necessary or desirable, adverse effect on the interior finishing of the vehicle can be avoided by providing a surface trim for the cover that matches that of the instrument panel surface so that there is no visible delineation of the opening prior to activation of the air bag module.

In current practice, the passenger side cover of an air bag module is attached to the module by fasteners such as screws, bolts, rivets or studs. This manner of attachment, while effective, is rather complicated, is labor intensive and consequently costly.

Thus, there exists a need and a demand for a facile or more advantageous way to secure, that is, to attach a passenger side decorative or non-decorative cover to an air bag module, in a way which would eliminate the need for fasteners for the cover to module attachment.

An object of the invention is to provide a method of and apparatus for attaching a passenger side cover to an air bag module that enables the elimination of fasteners, that is, fastening devices such as screws, bolts, rivets or studs.

Another object of the invention is to provide a method of securing a cover to an air bag module having utility in an automotive vehicle comprising the steps of:
a. forming a canister housing containing a folded air bag to be inflated and having a generally rectangularly shaped opening at the air bag deployment end thereof,
b. forming at least two spaced depending portions on the underside of the cover that hang down and interface with two spaced portions at least of the perimeter of said canister housing rectangularly shaped opening,
c. forming attached to each of said spaced cover depending portions at least one first part of a two part attachment device, which first and second parts become attached when moved into engagement with each other,
d. forming in attached association with each of the spaced portions of the perimeter of said canister housing at least one second part of a two part attachment device,

whereby, with the first part of said attachment device held by each of said depending portions on the underside of said cover in interface relation with an associated one of the second parts on the perimeter of the canister housing, movement of the cover relative to the canister housing causes the first parts of the attachment device to engage the second parts of the attachment device and the cover to be attached to the canister housing.

A further object of the invention is to provide an apparatus for providing a slide/track attachment device for attaching a passenger side cover to an air bag module wherein the slide/track attachment device consists of two separate/independent tracks or grooves located on the perimeter of the canister housing of the module, with the tracks/grooves located opposite each other, and the cover having elements rigid therewith which engage and slide into the tracks/grooves.

In accomplishing this objective of the invention, the module or canister is provided with tracks or grooves. This allows the provision of a common boundary element, an interface or slide on the passenger side cover which engages and slides into the tracks or grooves. A cover with this attachment feature would be installed by relative horizontal movement of the cover relative to the air bag module by way of slides and tracks. This feature enables the elimination of all fasteners currently associated with attaching a passenger side cover to an air bag module.

Still another object of the invention is to provide an apparatus for attaching a passenger side cover to an air bag module wherein several clips positioned around the perimeter of the canister housing of the module provide an interface with openings or cutouts provided in the cover. The cover snaps on the canister with the clips on the latter positioned in place in the cover openings or cutouts. A cover with this attachment feature would be installed vertically and would be snapped into place. This feature would also enable the elimination of all fasteners currently associated with attaching a cover to a passenger air bag module.

The various features of novelty which characterize the invention are pointed out with particularity in the claims annexed to and forming a part of this specification. For a better understanding of the invention, its operating advantages, and specific objects attained by its use, reference is made to the accompanying drawings and descriptive matter in which a preferred embodiment of the invention is illustrated.

With this description of the invention, a detailed description follows with reference being made to the accompanying drawings which form part of the specification, of which:
Fig. 1 is a schematic fractional view illustrating a passenger module cross section including a reaction canister, the envelope of a folded air bag or cushion, a passenger side cover, and a slide/track cover attachment arrangement according to one embodiment of the invention;
Fig. 2 is a cross-sectional view taken along the lines 2-2 of Fig. 1;
Fig. 3 is a fractional perspective view illustrating the installation of the passenger side cover on the module:
Fig. 4 is a schematic view illustrating a passenger module cross section including a canister, the envelope of a folded air bag or cushion, and a clip/snap attachment arrangement according to a second embodiment of the invention; and
Fig. 5 is a cross sectional view taken along the lines 5-5 of Fig. 4.

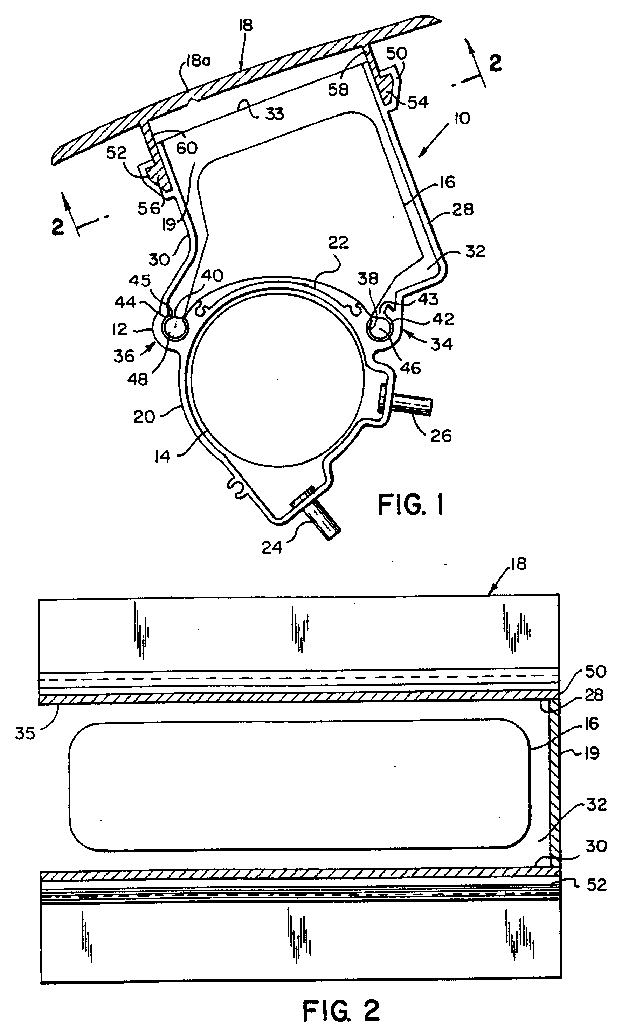

An air bag inflation restraint system for use on the passenger side of an automotive vehicle for restraining the movement of a passenger during a collision, as shown in the drawings, includes an elongated module 10 having a reaction canister 12, an elongated cylindrical inflator or gas generator 14, a folded air bag or cushion envelope 16, and a passenger side cover 18. An end plate provided at each end of the canister 12 retains the shape of the elongated body part thereof and holds the inflator 14 in place, properly indexed. One end plate 19, as shown in Fig. 1, is suitably installed on the canister 12 prior to installation thereon of the passenger side cover 18. The other end plate (not shown) is attached to the canister 12 following the installation thereon of the cover 18. A plurality of screw retaining grooves (not shown) are provided at each end of the canister 12 for retaining thereat a respectively associated end plate.

Cover 18 may be made of any material suitable for serving a decorative function on the instrument panel of the automotive vehicle in which the module 10 is installed or for serving a non-decorative function therein as well as providing protection for the folded air bag 16. As shown in Figs. 1, 3 and 4, the cover 18 may be slightly curved to match the profile of the vehicle instrument panel and has no projecting flanges at the boundary line or perimeter thereof.

Integrally formed with the canister 12 of the module 10 is an elongated continuous circumference one piece diffuser tube 20. Axially spaced inflating gas exit ports or slots 22 are provided in the portion of the wall of the diffuser tube 20. Positioned within the diffuser tube 20 is the inflator 14. Brackets 24 and 26 are attached to the exterior of the module 10 for facilitating the installation of the module 10 in the instrument panel of an automotive vehicle. A passenger side cover 18 that matches the profile and decoration of the surface of the vehicle instrument panel may be provided. When the module 10 is installed in the vehicle, the decorative cover 18 forms part of the surface of the automotive instrument panel.

The canister 12 includes an integrally formed top panel 28 and a bottom panel 30. That is to say, the top panel 28, the bottom panel 30, and the diffuser tube 20 are all made in one piece. If desired, however, the diffuser 20, the top panel 28 and the bottom panel need not be made in a single piece. The top panel 28 and bottom panel 30 in conjunction with the diffuser tube 20 and an end plate at each of the opposite ends of the canister 12 define a cavity 32. Cavity 32 is formed within a housing 33 of the canister 12. Housing 33 has a perimeter 35 at the air bag deployment end thereof. The air bag folded in a conventional manner and forming the air bag 16 is housed in cavity 32.

Fig. 1 shows a cross sectional view of the continuous circumference one piece diffuser tube 20 with the integrally formed top panel 28 and bottom panel 30 of the canister 12. The diffuser 20 and top panel 28 and the bottom panel 30, as previously mentioned, are formed in a single piece as a continuous or unitary structure. By way of example and not limitation, it is noted that in a preferred embodiment, the configuration of the diffuser tube 20 and the canister housing 33 can be produced in extruded aluminum or steel.

The slots 22 in the diffuser portion of the diffuser tube 20, that portion which faces the air bag cushion envelope 16, that is, the gas inlet opening thereof, are located and sized so as to provide a desired distribution of gas into the air bag 16 of inflating gas that is produced by the inflator 14. The inflator 14 has an elongated cylindrical configuration and is retained in the diffuser tube 20, in concentric relation therewith, between the two opposed end plates.

For retaining the air bag 16 within the module 10, there is provided, as shown in Figs. 1-3, a pair of elongated key hole shaped slots or grooves 34 and 36 which are provided at the inflating gas inlet side of the cavity 32 in association, respectively, with the top panel 28 and the bottom panel 30. In Fig. 1 at each of the upper and lower sides of the inflating gas inlet opening (not shown) of the air bag 16, the fabric of the air bag 16 is formed and sewn into a loop, specifically a loop 38 at the upper side and a loop 40 at the lower side. The loops 38 and 40 are inserted in respectively associated grooves 42 and 44 that are formed at the forward ends of the upper and lower panels 28 and 30 adjacent the diffuser tube 20. Squeezing of the loops 38 and 40 is required to facilitate such insertion through a respective narrow entry way 43 and 45 provided into each of the respectively associated grooves 42 and 44. Retention of the loops 38 and 40 in the grooves 42 and 44 and thereby attachment of the air bag 16 to the canister 12 and the diffuser tube 20 is effected by the insertion of rods 46 and 48 through the loops 38 and 40, respectively, and thereby through the respectively associated grooves 42 and 44. The rods 46 and 48 may be fastened securely in fully inserted position in any suitable manner.

In accordance with this embodiment of the invention, the cover 18 is attached to the module 10 by a slide/track attachment device comprising a track or groove formed at the perimeter 35 of the canister 12, that is, the upper ends of each of the upper panel 28 and of the lower panel 30 remote from the diffuser tube 20. More specifically, a straight track 50 is formed at the upper end of the upper panel 28 along the length thereof and a straight track 52 is formed at the upper end of the lower panel 30 along the length thereof. Each of the tracks 50 and 52 comprise part of the canister perimeter 35 and is formed as a straight elongated key hole slot or groove that extends for the full length of the respectively associated upper panel 28 and lower panel 30.

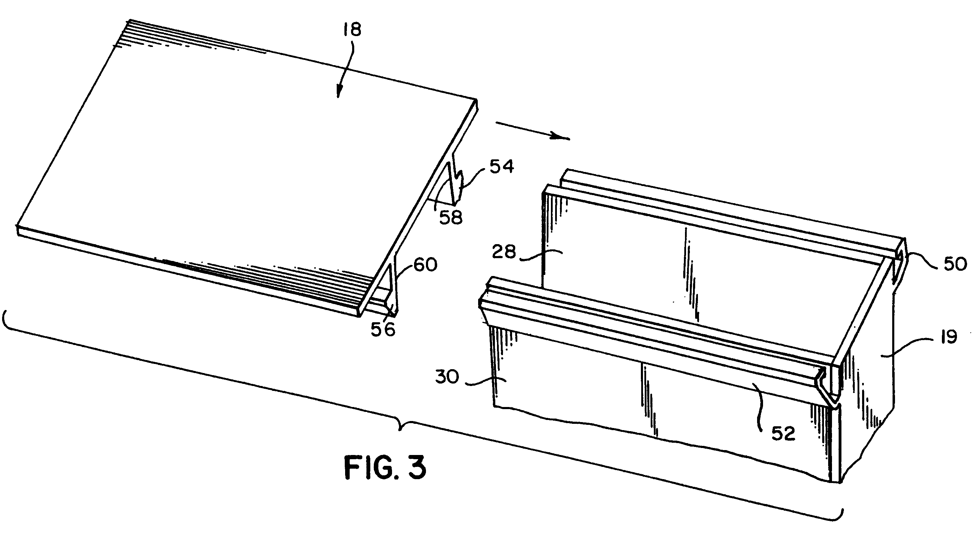

The cover 18 for the module 10 includes a feature, specifically straight elongated slides 54 and 56, which hang down or depend on depending portions 58 and 60 from the under side of the cover 18. Slides 54 and 56 are so positioned as to be slideable into a respectively associated one of the elongated tracks 50 and 52 of the canister 12. Thus, as shown in Figs. 1 and 3, the slide 54 is formed on the end of an elongated depending portion 58 that extends or hangs downwardly for substantially the entire length of the cover 18. The downwardly extending distance of the portions 58 and 60 is such that with the cover installed on module 10 and the module 10 installed in the automotive vehicle and secured thereto by the brackets 24 and 26, the cover 18 will then close the opening in the instrument panel of the vehicle in substantially flush relation.

As those skilled in the art will understand, in this embodiment of the invention the cover 18 must be installed on the module 10 before the module 10 is installed in the vehicle. Additionally, for the cover 18 to be installed on the module 10, the installation of the end plate on one side at least of the module 10 must be postponed until the cover 18 has been installed on the module 10. That is to say, installation of the cover 18 on the module 10 requires the positioning of the slides 54 and 56 at one end thereof adjacent one end of the canister 12 so that the slides 54 and 56 may enter and slide into the respectively associated tracks 50 and 52. Sliding of the slides 54 and 56 for substantially the full length of the tracks 50 and 52 is necessary for proper installation of the cover 18 on the canister 12. When the cover 18 has been installed on the module 10, the installation of the second end plate on the canister 12 is carried out.

In the operation of the module 10, when a sensor (not shown) detects the incipient occurrence of a collision of the automotive vehicle in which it is installed, the inflator 14 is activated and inflation gases pass through the gas exit slots 22 in the diffuser tube 20 into a gas inlet opening (not shown) in the folded air bag 16. The resulting pressure forces open the cover 18 causing it to rupture along a break seam 18a. After the cover 18 has thus been ruptured and forced open, the inflatable air bag 16 is deployed.

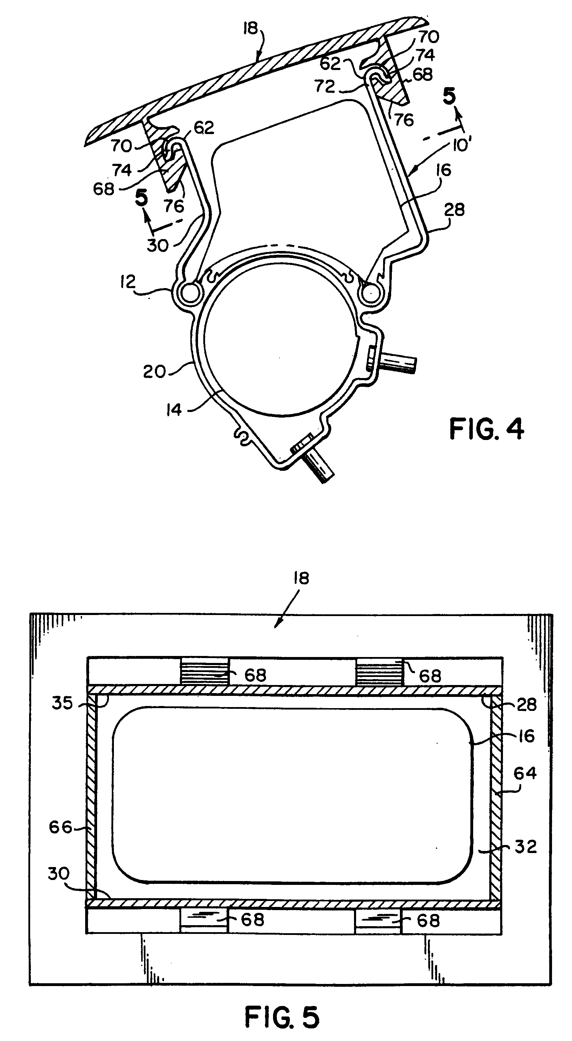

In Fig. 4 there is illustrated a second embodiment of the invention comprising an attach feature for an air bag restraint passenger module to secure a decorative or a non-decorative cover to a module or canister. Similarly to the module or canister disclosed in Figs. 1-3, the canister in Fig. 4 could be made of extruded aluminum or steel.

The air bag restraint system shown in Fig. 4 and designated 10', includes an elongated canister 20, an elongated inflator 14, a folded air bag or cushion envelope 16, a top panel 28 and a bottom panel 30. These components may be substantially like the correspondingly numbered components shown in Figs. 1-3 and described in connection with the first embodiment of the invention.

In the second embodiment of the invention as shown in Figs. 4 and 5, the attach feature consists of several clips 62 around the perimeter 35 defined by the ends of the upper panel 28 and the lower panel 30 and by two opposed end plates 64 and 66. In this second invention embodiment the two end plates 64 and 66 are attached to the opposed ends of the canister 12 before the cover 18 is attached thereto. The arrangement is such that the clips 62 interface with or engage with openings, grooves, or cutouts 70 in a rectangularly shaped depending portion 68 that is slightly larger than that of the perimeter 35 of the canister housing 33. The depending portion 68 hangs down from the cover 18.

Each of the clips 62 on the upper edge of the panels 28 and 30 and of the end plates 64 and 66 on which, optionally, they may also be provided, that is, on the upper edge of the module housing 72, are curved outwardly forming a rolled over lip 74. Each lip 74 engages and is locked in mating relation in the grooves in the inner side 76 of depending portion 68 when the module housing 72 and the folded air bag cushion 16 are pressed in place with the depending portion 68 that is attached to the lower side of the cover 18.

As shown in Figs. 4 and 5, the clips 62 are suitably formed in the upper portions of the module housing 72, that is, of the upper portions of the top panel 28 and the bottom panel 30. Those skilled in the art will understand, however, that, if desired, each of the clips may comprise a separate component that is attached in a suitable manner to the upper edge of the module housing 72.

A cover 18 with this attach feature would be installed vertically and would be snapped into place. This feature would eliminate all fasteners associated with attaching a cover to a passenger air bag module.

Thus, in accordance with the invention there has been provided a method of and apparatus for attaching a passenger side cover to an air bag module which enables the elimination of fasteners that are currently used such as screws, bolts, rivets or studs.

## Claims

1. A method of securing a cover (18) to an air bag module (10) having utility in an automotive vehicle comprising the steps of:
(a) forming a canister housing (12) for containing a folded air bag (16) to be inflated and having a generally rectangularly shaped opening for the deployment of the air bag (16), when inflated, the canister housing (12) including a diffuser (20) and elongated top and bottom panels (28, 30) with an end plate (19) provided at each end of the canister housing (12) to retain the shape of an elongated body part thereof,
(b) forming at least two spaced depending portions (58, 60) on the underside of the cover (18) that hang down and interface with two spaced portions at least of the perimeter (35) of said canister housing rectangularly shaped opening,
(c) forming, attached to each of said spaced cover portions (58, 60), at least one first part (54, 56) of a two part attachment device, which first (54, 56) and second (50, 52) parts become attached when moved into engagement with each other,
(d) forming, in attached association with each of the spaced portions of the perimeter (35) of said canister housing (12), at least one second part (50, 52) of said two part attachment device,
whereby, with the first part (54, 56) of said attachment device held by each of said depending portions (58, 60) on the underside of said cover (18) in interface relation with an associated one of the second parts (50, 52) on the perimeter (35) of the canister housing (12), movement of the cover (18) relative to the canister housing (12) causes the first parts (54, 56) of the attachment device to engage the second parts (50, 52) of the attachment device and the cover (18) to be attached to the canister housing (12).

2. The method of claim 1 wherein the two part attachment device recited in step (c) is a slide (54, 56) and track (50, 52) attachment device, and the movement of the cover (18) relative to the canister housing (12) to cause the attachment of the cover (18) to the canister housing (12) is a horizontal or longitudinal movement.

3. The method of claim 2 wherein a slide (54, 56) of each of said attachment devices is attached to a respectively associated one of said depending portions (58, 60) on the underside of said cover (18) and the track (50, 52) is attached to each of the spaced portions of the perimeter (35) of the canister housing (12).

4. The method of claim 1 wherein the two part attachment device recited in step (c) is a clip or snap on device (62, 70) and the movement of the cover (18) relatively to the canister housing (12) to cause the attachment of the cover (18) to the canister housing (12) is a vertical movement or one substantially perpendicular to a plane containing the deployment opening that moves the cover (18) closer to the module housing (12).

5. The method of claim 4 wherein at least several clips (62) are attached in spaced relation to the perimeter of the module housing (12), and several openings (70) engageable by the clips (62) are formed in the depending portion (68) on the underside of the cover (18).

6. The method of any preceding claim wherein said cover (18) has no projecting flange at a periphery thereof and said diffuser (20) has an elongated continuous circumference tubular form and is formed in one piece with the canister housing (12).

7. The method as defined by any preceding claim wherein the air bag module (10) is stored behind a section of vehicle trim panel such as the instrument panel with the air bag module, when activated, deploying the inflated air bag (16) through an opening in the instrument panel that is normally closed by the cover (18) of the air bag module (10), with the surface trim of the cover matching the profile and decoration of the surface of the vehicle trim panel so that there is no delineation of the opening therein prior to activation of the air bag module (10) and including additional steps of:
(e) forming brackets (24, 26) attached to the air bag module (10) for facilitating the installation of the module (10) behind the instrument panel of the vehicle, and additionally, in step
(f) forming the depending portions (58, 60) on the underside of the cover (18) to extend downwardly a distance such that with the cover (18) installed on the canister housing (12) and the module (10) installed in the vehicle behind the instrument panel and secured thereto by the brackets, the cover (18) closes the opening in the instrument panel of the vehicle in substantially flush relation.

8. An air bag module (10) having utility on the passenger side of an automotive vehicle comprising,
a canister housing (12) for containing a folded air bag (16) to be inflated and having a generally rectangularly shaped opening at an air bag deployment end thereof, said opening having a perimeter (35), said canister housing (12) including a diffuser (20) and elongated top (28) and bottom (30) panels, with an end plate (19) provided at each end of the canister housing (12) to retain the shape of an elongated body part thereof,
a cover (18) for said module (12) having a depending portion (58, 60) on the underside thereof that interfaces with a portion at least of the perimeter (35) of the rectangularly shaped opening of said canister housing (12), and
at least two two-part attachment devices each of which comprise a first part (54, 56) attached to said depending portion (58, 60) on said cover (18) and a second part (50, 52) attached to the perimeter of said housing (12),
whereby with the first part (54, 56) of each of said two two-part attachment devices held by said depending portion (58, 60) of said cover (18) in interface relation with an associated one of the second parts (50, 52) on the perimeter (35) of the rectangularly shaped opening of said canister housing (12), movement of the cover (18) relative to the canister housing (12) causes the first part (54, 56) of each of the two-part attachment devices to engage a second individually associated part of the second parts (50, 52) of the attachment devices and causes the cover (18) to be attached to said canister housing (12).

9. The air bag module (10) of claim 8 wherein each of the two two-part attachment devices is a slide (54, 56) and track (50, 52) attachment device and the movement of the cover (18) relative to the canister housing (12) to cause the attachment of the cover (18) to the canister housing (12) is a horizontal or longitudinal movement.

10. The air bag module of claim 9 wherein each of the slide and track attachment devices includes a slide (54, 56) and a track (50, 52) in which the slide (54, 56) is adapted to move as guided by the track (50, 52) when positioned therein,
wherein the depending portion (58, 60) on the underside of said cover (18) comprises two spaced straight portions that interface with two spaced straight portions of the perimeter (35) of said canister housing (12), and
wherein a slide (54, 56) is attached to each of the two spaced straight portions on the underside of said cover (18) and a track (50, 52) is attached to each of the two spaced straight portions of the perimeter (35) of said canister housing (12).

11. The air bag module (10') of claim 8 wherein each of the two two-part attachment devices is a clip or snap on device (62, 70) and the movement of the cover (18) relatively to the canister housing (12) to cause the attachment of the cover (18) to the canister housing (12) is a vertical movement or one substantially perpendicular to a plane containing the deployment opening that moves the cover (18) closer to the canister housing (12).

12. The air bag module (10') of claim 11 wherein a plurality of clips (62) are attached in spaced relation to the perimeter of the module housing (12), and a plurality of openings (70) engageable by the clips (62) are formed in the depending portion (68) on the underside of the cover (18).

13. The air bag module (10) of any one of claims 8 to 12 wherein said diffuser (20) is an elongated continuous circumference tubular diffuser formed in one piece with the canister housing (12) and the cover (18) is slightly curved and has no projecting flanges at its perimeter.
